# EUROPÄISCHE PATENTSCHRIFT

(11) **EP 3 426 369 B1**
(45) Veröffentlichungstag und Bekanntmachung des Hinweises auf die Patenterteilung: **17.08.2022**
(21) Anmeldenummer: 17708974.5
(22) Anmeldetag: 08.03.2017
(51) Int. Cl.: B01D 3/32, B01J 19/32, F25J 3/04

(54) **PACKUNGSANORDNUNG, STOFFAUSTAUSCHKOLONNE UND VERFAHREN**
PACKAGE ASSEMBLY, MATERIAL TRANSFER COLUMN AND METHOD
SYSTÈME D'EMBALLAGE, COLONNE D'ÉCHANGE DE MATIÈRE ET PROCÉDÉ

(30) Priorität: 10.03.2016 EP 16000578
(43) Veröffentlichungstag der Anmeldung: 16.01.2019
(73) Patentinhaber: Linde GmbH, 82049 Pullach (DE)
(72) Erfinder: FERSTL, Johann, 80995 München (DE); MOLL, Anton, 82399 Raisting (DE); FLÜGGEN, Rainer, 83673 Bichl (DE); BAUER, Ludwig, 85114 Buxheim (DE); NGUYEN, Manh-Hung, 81241 München (DE); HOFFMANN, Rainer, 82008 Unterhaching (DE)
(74) Vertreter: Meilinger, Claudia Sabine
(86) Internationale Anmeldenummer: PCT/EP2017/025040
(87) Internationale Veröffentlichungsnummer: WO 2017/153054

(56) Entgegenhaltungen:
- EP-A1- 0 601 257
- EP-A1- 0 913 192
- EP-A2- 1 647 318
- DE-A1- 10 238 489
- DE-A1- 19 520 802

## Beschreibung

Die Erfindung betrifft eine Packungsanordnung für eine Stoffaustauschkolonne, eine Stoffaustauschkolonne mit einer derartigen Packungsanordnung und ein Verfahren zum Herstellen einer derartigen Packungsanordnung.

Mit Hilfe von Stoffaustauschkolonnen wie Rektifikations- oder Luftzerlegungssäulen ist es möglich, verflüssigte Luft in ihre Bestandteile zu zerlegen. Eine derartige Stoffaustauschkolonne weist einen zylinderförmigen Behälter auf, in dem sogenannte Packungen angeordnet sind. Hierbei wird zwischen ungeordneten und geordneten Packungen unterschieden. Ungeordnete Packungen sind Schüttungen aus definiert geformten Körpern wie Ringen, Zylindern, Sattelkörpern oder dergleichen. Im Gegensatz hierzu sind bei geordneten Packungen meist mit wellenförmigen oder zackenförmigen Strukturen versehene Bleche so angeordnet, dass Kanäle und Austauschflächen für Flüssigkeits- und oder Gasströme gebildet werden, damit es zu einer Lenkung der Gas- und/oder Flüssigkeitsströme und zu einem intensiven Kontakt beider kommt. Bei geordneten Packungen werden in der Regel mehrere strukturierte Packungsscheiben aufeinander gestapelt. Die Packungsscheiben können aus blockförmigen Packungspaketen aufgebaut sein.

Durch beispielsweise Gasdruckstöße oder durch Fluten des Behälters können Verschiebungen der Packungsscheiben und/oder der Packungspakete auftreten, die zum Entstehen von Spalten zwischen den Packungsscheiben und einzelnen Packungspaketen einer Packungsscheibe führen können.

EP 0 913 192 A1 und EP 0 601 257 A1 beschreiben jeweils eine Stoffaustauschkolonne mit einer Packung aus Segmenten und einem im Ringspalt zwischen der Packung und der Kolonnenwand angeordneten Kragen. Bei der Montage der Packung werden die Segmente, die aus miteinander verbundenen gewellten Lamellen zusammengesetzt sind, innerhalb des Kragens angeordnet. EP 0 913 192 A1 bildet jeweils den Oberbegriff der unabhängigen Patentansprüche.

Die DE 195 20 802 A1 beschreibt ein Verfahren zum Einbau einer Schicht einer geordneten Packung in eine Stoffaustauschkolonne. Bei dem Verfahren wird die Packungsschicht in radialer Richtung verspreizt, indem zwischen mindestens ein Paar von benachbarten Segmenten einzelne Lamellen des Materials, aus dem die Packung aufgebaut ist, Streckmetall oder sonstiges perforiertes Material eingelegt wird.

Die Aufgabe der vorliegenden Erfindung besteht darin, eine weiter verbesserte Packungsanordnung zur Verfügung zu stellen.

Demgemäß wird eine Packungsanordnung für eine Stoffaustauschkolonne vorgeschlagen. Die Packungsanordnung umfasst zumindest eine strukturierte Packungsscheibe und einen Behälter, in dem die zumindest eine strukturierte Packungsscheibe angeordnet ist, wobei die zumindest eine strukturierte Packungsscheibe Packungspakete aufweist, wobei jedes Packungspaket miteinander verbundene Packungsbleche umfasst, wobei die Packungsbleche gewellt sind und Wellenberge und Wellentäler aufweisen, wobei sich benachbarte Packungsbleche an den Wellenbergen berühren, wobei die Packungspakete spaltfrei aneinander angefügt sind. Erfindungsgemäß sind zwischen den Packungspaketen zusätzliche gewellte, lose, d.h. unverbundene, Packungsbleche so eingefügt, dass die zumindest eine Packungsscheibe in einer Radialrichtung des Behälters gegen diesen vorgespannt ist, wobei sowohl die gewellten Packungsbleche der Packungspakete als auch die zwischen die Packungspakete eingefügten zusätzlichen gewellten losen Packungsbleche ausschließlich in einer oder parallel zu einer gemeinsamen Vorzugsebene angeordnet sind.

Die Radialrichtung ist vorzugsweise von einer Mittelachse des insbesondere rohrförmigen Behälters hin zu einer Innenwandung desselben orientiert. Unter einer Vorspannung kann zu verstehen sein, dass die Packungsscheibe eine radial wirkende, kontinuierliche Kraft auf den Behälter aufbringt. Der Behälter und somit auch die Packungsscheibe weisen vorzugsweise einen kreisrunden Querschnitt auf. Um die Packungsscheibe umlaufend kann ein Dichtkragen zum Abdichten der Packungsscheibe gegenüber dem Behälter vorgesehen sein. Vorzugsweise drückt die vorgespannte Packungsscheibe mit einer gleichmäßigen Kraft umfänglich innenseitig gegen den Behälter. Die zusätzlichen Packungsbleche können baugleich mit den Packungsblechen sein, aus denen die Packungspakete aufgebaut sind. Insbesondere können die zusätzlichen Packungsbleche vorhandenen Packungspaketen entnommen werden beziehungsweise von diesen abgetrennt werden. Die zusätzlichen Packungsbleche können auch als lose Packungsbleche bezeichnet werden, da diese nicht fest mit den Packungspaketen verbunden sind.

Die Vorzugsebene ist definiert als eine beliebige Ebene, die parallel zu einer Ebene ist, in der die Mittelachse des Behälters angeordnet ist. Die Vorzugsebene kann auch identisch mit dieser zuvor genannten, die Mittelachse umfassenden, Ebene sein. Das heißt, die Vorzugsebene schneidet den Behälter parallel zu dessen Mittelachse. Die Vorzugsebene ist somit eine beliebige den Behälter parallel zu seiner Mittelachse schneidende Ebene. Alle Packungsbleche einer Packungsscheibe sind parallel zu dieser Vorzugsebene orientiert. Die tatsächlich gewellten Packungsbleche können dabei vereinfacht als ebene Bleche, die jeweils eine Ebene bilden, angesehen werden. Alternativ können jeweils Wellenberge oder Wellentäler der gewellten Packungsbleche jeweils eine Ebene bilden, die parallel zu der Vorzugsebene ist. Die Packungsbleche unterschiedlicher Packungsscheiben können zueinander verdreht sein, so dass jede Packungsscheibe ihre eigene Vorzugsebene aufweisen kann. Das heißt, die Vorzugsebene kann auch als Vorzugsebene der zumindest einen Packungsscheibe bezeichnet werden. Der Einbau der Packungselemente in den Behälter kann sowohl bei horizontaler als auch bei vertikaler Anordnung desselben erfolgen. Der Einbau der Packungspakete erfolgt bevorzugt durch an dem Behälter vorgesehene Mannlöcher. Vorzugsweise werden die zusätzlichen Packungsbleche mit Hilfe ebener oder glatter Hilfsbleche zwischen die Packungspakete eingefügt. Die Hilfsbleche werden anschließend wieder entfernt.

Die Packungsbleche können strukturierte, beispielsweise gelochte und/oder gewellte, Aluminiumbleche sein. Vorzugsweise sind die Packungsbleche in dem Behälter vertikal, das heißt in Richtung der Mittelachse desselben orientiert. Die Wellentäler und Wellenberge sind vorzugsweise schräg zu der Mittelachse, beispielsweise in einem Winkel von 45°, orientiert. Die Wellentäler und Wellenberge bilden die zuvor genannten Kanäle für Gas und/oder Flüssigkeit.

Sowohl die Packungsbleche der Packungspakete als auch die zusätzlichen Packungsbleche sind gewellt. Dabei können die Packungsbleche eine Primärstruktur, nämlich die zuvor erwähnte Wellung mit den Wellenbergen und den Wellentälern, und eine Sekundärstruktur aufweisen. Die Sekundärstruktur kann eine an den Packungsblechen vorgesehene Einprägung, beispielsweise eine Einprägung mit pyramidenförmiger Geometrie, oder Lochung sein. Die Sekundärstruktur ist von ihren Abmessungen her bevorzugt kleiner als die Primärstruktur.

Durch die Vorspannung der Packungsscheibe ist somit gewährleistet, dass sich im Betrieb der Stoffaustauschkolonne keine Spalte in der Packungsscheibe bilden. Hierdurch wird eine Gas- und/oder Flüssigkeitsmaldistribution verhindert. Somit kann der Wirkungsgrad der Stoffaustauschkolonne verbessert werden. Unter einer Maldistribution ist eine Ungleichverteilung zu verstehen. Dadurch, dass sowohl die Packungsbleche der Packungspakete als auch die zwischen diesen eingefügten zusätzlichen Packungsbleche alle ausschließlich parallel zu der Vorzugsebene orientiert sind, wird im Vergleich zu dem oben beschriebenen, aus der DE 195 20 802 A1 bekannten Verfahren verhindert, dass nachträglich eingefügte Packungsbleche senkrecht zu der Vorzugsebene orientiert sind. Hierdurch wird ein Fluidstrom entlang der Vorzugsebene in der zumindest einen Packungsscheibe nicht behindert. Auch dies verhindert eine Gas- und/oder Flüssigkeitsmaldistribution.

Die Spaltfreiheit wird durch die Vorspannung dauerhaft gewährleistet. Vorzugsweise kontaktieren sich benachbarte Packungspakete und Packungsbleche an Kontaktbereichen. Die Packungsbleche sind vorzugsweise gewellt, so dass zwischen benachbarten Packungsblechen definierte Kanäle gebildet werden, in denen Gas und/oder Flüssigkeit strömen kann. Ein Spalt ist vorliegend definiert als ein Bereich zwischen Packungspaketen oder Packungsblechen, in dem diese sich nicht kontaktieren und in dem keine Kontaktbereiche vorgesehen sind. Das heißt, in oder an dem Spalt berühren sich die Packungspakete oder Packungsbleche nicht. In dem Spalt werden demnach auch keine der zuvor genannten Kanäle für Gas und/oder Flüssigkeit gebildet. Ein derartiger Spalt kann eine quaderförmige Geometrie aufweisen.

Gemäß einer weiteren Ausführungsform sind die zusätzlichen Packungsbleche paarweise zwischen die Packungspakete eingefügt.

Es können auch mehrere Paare an zusätzlichen Packungsblechen, beispielsweise vier zusätzliche Packungsbleche oder sechs zusätzliche Packungsbleche, eingefügt sein. Das heißt, die Anzahl der eingefügten zusätzlichen Packungsbleche ist insbesondere geradzahlig. Die zusätzlichen Packungsbleche sind wie die Packungsbleche der Packungspakete gewellt. Die beiden zusätzlichen Packungsbleche eines Paares an zusätzlichen Packungsblechen sind dabei so angeordnet, dass sich die Wellenberge und die Wellentäler der Packungsbleche überkreuzen und beispielsweise in einem Winkel von 90° zueinander angeordnet sind. Die beiden zusätzlichen Packungsbleche eines Paares an zusätzlichen Packungsblechen kontaktieren sich dann an den Wellenbergen.

Gemäß einer weiteren Ausführungsform sind die zusätzlichen Packungsbleche aus den Packungspaketen entnehmbar.

Die Packungsbleche eines Packungspakets sind mit Hilfe von Verbindungsmitteln, wie beispielsweise Drahtstiften, Schrauben oder Stahlbändern, miteinander verbunden. Mehrere Packungsbleche sind zur Bildung eines Packungspakets aufeinander gestapelt. Die Anzahl der Packungsbleche pro Packungspaket ist beliebig. Zum Entnehmen von Packungsblechen sind die Packungspakete auftrennbar. Bevorzugt sind die zusätzlichen Packungsbleche paarweise aus den Packungspaketen entnehmbar.

Gemäß einer weiteren Ausführungsform bilden mehrere strukturierte Packungsscheiben eine strukturierte Packung.

Die Packung kann eine beliebige Anzahl an übereinander gestapelten Packungsscheiben umfassen. Vorzugsweise sind die Vorzugsebenen zweier unmittelbar übereinander angeordneter Packungsscheiben senkrecht zueinander positioniert. Die Vorzugsebenen können jedoch in jedem beliebigen Winkel zueinander angeordnet sein. Die Packungsanordnung kann mehrere übereinander angeordnete Packungen umfassen.

Gemäß einer weiteren Ausführungsform sind die strukturierten Packungsscheiben der strukturierten Packung in einer Längsrichtung des Behälters mit einer Presskraft beaufschlagt.

Durch die Presskraft wird die Bildung von Spalten zwischen Packungsscheiben einer Packung und zwischen übereinander angeordneten Packungen verhindert. Die Presskraft wird kontinuierlich aufgebracht.

Gemäß einer weiteren Ausführungsform ist die Presskraft mit Hilfe eines auf die strukturierte Packung aufgelegten Niederhalters, einem auf die strukturierte Packung aufgelegten Flüssigkeitsverteiler und/oder eines auf die strukturierte Packung aufgelegten Gewichts aufbringbar.

Der Niederhalter, der Flüssigkeitsverteiler und/oder das Gewicht können direkt auf eine oberste Packungsscheibe der Packung aufgelegt sein. Insbesondere kann auch die in dem Flüssigkeitsverteiler aufgenommene Flüssigkeit die Packung zusätzlich beschweren.

Gemäß einer weiteren Ausführungsform ist der Niederhalter verstellbar an einer Trageinrichtung des Behälters befestigt.

Die Trageinrichtung kann eine Vielzahl gleichmäßig über einen Umfang des Behälters verteilte Laschen aufweisen, die fest mit dem Behälter verbunden sind. Beispielsweise kann die Packung durch das Aufbringen der Presskraft vorgespannt werden und dann der Niederhalter so eingestellt werden, dass auch bei einem Wegnehmen der Presskraft die Packung vorgespannt bleibt.

Gemäß einer weiteren Ausführungsform sind an dem Niederhalter Langlöcher vorgesehen, in denen zum Verstellen des Niederhalters Befestigungselemente verlagerbar aufgenommen sind.

Die Langlöcher können auch an den Laschen vorgesehen sein. Die Befestigungselemente sind vorzugsweise Schrauben. Hierdurch ist der Niederhalter beliebig einstellbar.

Gemäß einer weiteren Ausführungsform ist der Niederhalter zum Aufbringen der Presskraft mit Hilfe von Federelementen in Richtung auf die strukturierte Packung zu federvorgespannt.

Die Federelemente sind vorzugsweise Druckfedern. Die Federelemente können zwischen dem Niederhalter und einer an dem Behälter vorgesehenen Trageinrichtung vorgesehen sein. Der Einsatz der Federelemente hat den Vorteil, dass diese nur wenig Querschnittsfläche des Behälters verdecken und deshalb nicht dimensionierend für einen Innendurchmesser des Behälters sind.

Ferner wird eine Stoffaustauschkolonne mit einer derartigen Packungsanordnung vorgeschlagen.

Die Stoffaustauschkolonne kann eine Vielzahl derartiger Packungsanordnungen umfassen. Die Anwendung der Packungsanordnung kann ferner auch überall dort erfolgen, wo strukturierte Packungen eingesetzt werden, beispielsweise in Behältern für 2- oder 3-Phasentrennung, Kühltürmen oder dergleichen.

Weiterhin wird ein Verfahren zum Herstellen einer Packungsanordnung vorgeschlagen. Das Verfahren umfasst die folgenden Schritte: Bereitstellen eines Behälters; Bereitstellen von Packungspaketen, wobei jedes Packungspaket miteinander verbundene Packungsbleche umfasst; Einbau der Packungspakete in den Behälter zum Bilden zumindest einer Packungsscheibe. Erfindungsgemäß umfasst das Verfahren des Weiteren: Bereitstellen von zusätzlichen, gewellten, losen, d.h. unverbundenen, Packungsblechen; Einfügen der zusätzlichen Packungsbleche zwischen die Packungspakete derart, dass die zumindest eine Packungsscheibe in einer Radialrichtung des Behälters gegen diesen vorgespannt wird, wobei sowohl die Packungsbleche der Packungspakete als auch die zwischen die Packungspakete eingefügten zusätzlichen Packungsbleche ausschließlich in einer oder parallel zu einer gemeinsamen Vorzugsebene angeordnet werden, wobei die Packungspakete zum Schließen von senkrecht zu der Vorzugsebene und zwischen den Packungspaketen angeordneten Spalten zunächst senkrecht zu der Vorzugsebene aufeinander zu und anschließend in der Radialrichtung nach außen bis die Packungspakete den Behälter kontaktieren verschoben werden, um einen Spalt zu bilden, der parallel zu der Vorzugsebene angeordnet ist, und wobei der Spalt, der parallel zu der Vorzugsebene angeordnet ist, mit den zusätzlichen gewellten, losen Packungsblechen geschlossen wird.

Der Einbau der Packungspakete in den Behälter und das Einfügen der zusätzlichen Packungsbleche kann gleichzeitig durchgeführt werden. Mit Hilfe des Verfahrens können zwischen den Packungspaketen sowohl Spalte, die in der Vorzugsebene, als auch Spalte, die senkrecht zu der Vorzugsebene, orientiert sind, vermieden werden. Beim Einbau der Packungspakete in den Behälter können die Packungspakete auch manuell oder hydraulisch mit der Presskraft beaufschlagt werden. Die Packungsbleche werden vorzugsweise mit Hilfe unstrukturierter, das heißt, glatter Hilfsbleche eingefügt. Hierzu werden die Hilfsbleche zwischen die Packungspakete eingeschoben und die Packungsbleche entlang der Hilfsbleche zwischen die Packungspakete eingedrückt. Das Verfahren kann auch einen Schritt des Schließens von in der Vorzugsebene orientierten Spalten und senkrecht zu der Vorzugsebene orientierten Spalten umfassen. Dabei werden Packungsbleche vorzugsweise ausschließlich in die Spalte eingefügt, die in oder parallel zu der Vorzugsebene orientiert sind. Die Spalte, die senkrecht zu der Vorzugsebene orientiert sind, werden insbesondere durch ein Verschieben der Packungspakete entlang der Vorzugsebene geschlossen.

Insbesondere kann sich, wie zuvor erwähnt, beim Montieren der Packungspakete ein Spalt bilden, der senkrecht zu der Vorzugsebene orientiert ist. Um einen derartigen Spalt zu schließen, ist es insbesondere nicht möglich, Packungsbleche in diesen einzufügen, da die Packungsbleche dann senkrecht zu der Vorzugsebene orientiert wären und eine Barriere in der jeweiligen Packungsscheibe bilden würden. Stattdessen wird der Spalt vorzugsweise dadurch geschlossen, dass die Packungspakete in Richtung der Vorzugsebene zusammengeschoben werden. Durch das Zusammenschieben der Packungspakete können sich außenseitig an der Packungsscheibe umfängliche Spalte bilden. Um diese umfänglichen Spalte zu schließen, können beispielsweise von den zuvor in der Vorzugsebene verschobenen Packungspaketen in Radialrichtung außenliegende Packungsbleche entfernt werden. Die Packungspakete, bei denen die Packungsbleche entfernt werden, können dann in der Radialrichtung nach außen verlagert werden bis die umfänglichen Spalte geschlossen sind und die Packungspakete sich an den Behälter anschmiegen. Durch das Verschieben der Packungspakete radial nach außen kann dann ein in der Vorzugsebene verlaufende Spalt gebildet werden. Dieser kann anschließend, wie zuvor erläutert, wieder mit Hilfe eingeschobener Packungsbleche geschlossen werden. Bei dem Verfahren werden bevorzugt die Packungspakete mitsamt den zusätzlichen Packungsblechen bereitgestellt. Das heißt, bei dem Fertigen oder dem Zuliefern der Packungspakete werden bevorzugt auch die zusätzlichen Packungsbleche, insbesondere paarweise, bereitgestellt. Die zusätzlichen Packungsbleche können dann paarweise zwischen die Packungspakete eingefügt oder weggelassen werden.

Gemäß einer Ausführungsform werden mehrere Packungsscheiben durch das Aufbringen einer Presskraft zusammengedrückt.

Die Presskraft kann manuell, hydraulisch, mit Hilfe von Federelementen, durch das Auflegen eines Niederhalters auf die strukturierte Packung, durch das Auflegen eines Flüssigkeitsverteilers auf die strukturierte Packung und/oder durch das Auflegen eines Gewichts auf die strukturierte Packung aufgebracht werden.

Gemäß einer weiteren Ausführungsform werden die zusätzlichen Packungsbleche paarweise zwischen die Packungspakete eingefügt.

Es können auch mehrere Paare an zusätzlichen Packungsblechen, beispielsweise vier zusätzliche Packungsbleche oder sechs zusätzliche Packungsbleche, eingefügt werden. Das heißt, die Anzahl der eingefügten zusätzlichen Packungsbleche ist insbesondere geradzahlig. Die zusätzlichen Packungsbleche sind wie die Packungsbleche der Packungspakete gewellt. Die beiden zusätzlichen Packungsbleche eines Paares an zusätzlichen Packungsblechen sind dabei so angeordnet, dass sich die Wellenberge und die Wellentäler der Packungsbleche überkreuzen und beispielsweise in einem Winkel von 90° zueinander angeordnet sind. Die beiden zusätzlichen Packungsbleche eines Paares an zusätzlichen Packungsblechen kontaktieren sich dann an den Wellenbergen.

Gemäß einer weiteren Ausführungsform werden die zusätzlichen Packungsbleche aus den Packungspaketen entnommen.

Insbesondere können, wie zuvor beschrieben, bei Anpassarbeiten der Packungspakete übrig gebliebene Packungsbleche ressourcenschonend weiterverwendet werden. Bevorzugt werden die zusätzlichen Packungsbleche paarweise aus den Packungspaketen entnommen.

Weitere mögliche Implementierungen der Packungsanordnung, der Stoffaustauschkolonne und/oder des Verfahrens umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Packungsanordnung, der Stoffaustauschkolonne und/oder des Verfahrens hinzufügen.

Weitere vorteilhafte Ausgestaltungen und Aspekte der Packungsanordnung, der Stoffaustauschkolonne und/oder des Verfahrens sind Gegenstand der Unteransprüche sowie der im Folgenden beschriebenen Ausführungsbeispiele der Packungsanordnung, der Stoffaustauschkolonne und/oder des Verfahrens. Im Weiteren werden die Packungsanordnung, die Stoffaustauschkolonne und/oder das Verfahren anhand von bevorzugten Ausführungsformen unter Bezugnahme auf die beigelegten Figuren näher erläutert.
Fig. 1 zeigt eine schematische Schnittansicht einer Ausführungsform einer Stoffaustauschkolonne;
Fig. 2 zeigt eine schematische Schnittansicht einer Ausführungsform einer Packungsanordnung für die Stoffaustauschkolonne gemäß Fig. 1;
Fig. 3 zeigt eine schematische Aufsicht der Packungsanordnung gemäß Fig. 2;
Fig. 4 zeigt eine schematische Schnittansicht einer weiteren Ausführungsform einer Packungsanordnung für die Stoffaustauschkolonne gemäß Fig. 1;
Fig. 5 zeigt eine schematische Schnittansicht einer weiteren Ausführungsform einer Packungsanordnung für die Stoffaustauschkolonne gemäß Fig. 1;
Fig. 6 zeigt eine schematische perspektivische Ansicht einer Ausführungsform eines Niederhalters für die Stoffaustauschkolonne gemäß Fig. 1;
Fig. 7 zeigt eine weitere schematische Aufsicht der Packungsanordnung gemäß Fig. 2;
Fig. 8 zeigt eine weitere schematische Aufsicht der Packungsanordnung gemäß Fig. 2;
Fig. 9 zeigt eine weitere schematische Aufsicht der Packungsanordnung gemäß Fig. 2;
Fig. 10 zeigt eine weitere schematische Aufsicht der Packungsanordnung gemäß Fig. 2;
Fig. 11 zeigt eine schematische Ansicht zweier Packungspakete für die Packungsanordnung gemäß Fig. 2;
Fig. 12 zeigt eine schematische perspektivische Ansicht eines Packungsblechs für ein Packungspaket gemäß Fig. 11; und
Fig. 13 zeigt ein schematisches Blockdiagramm einer Ausführungsform eines Verfahrens zum Herstellen der Packungsanordnung gemäß Fig. 2.

In den Figuren sind gleiche oder funktionsgleiche Elemente mit denselben Bezugszeichen versehen worden, sofern nichts anderes angegeben ist.

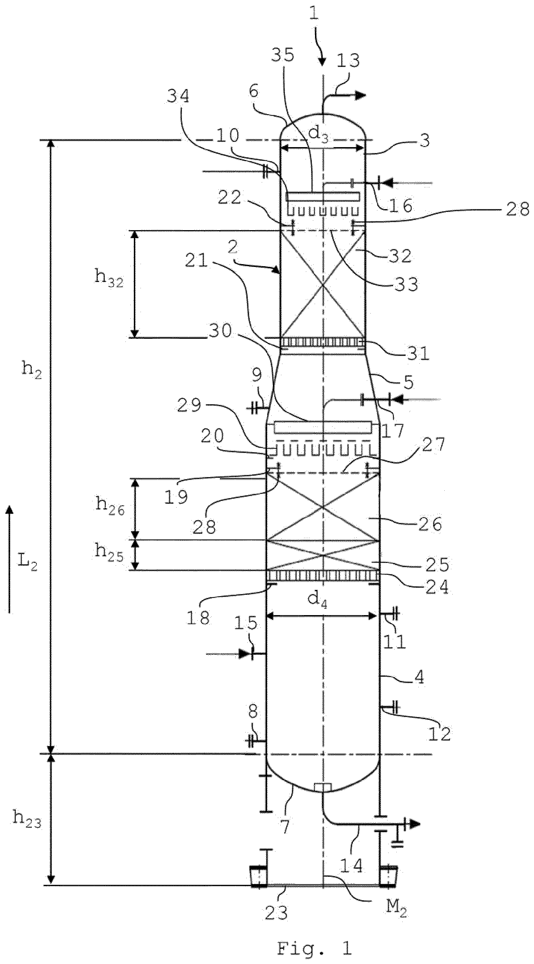

Die Fig. 1 zeigt eine schematische Schnittansicht einer Ausführungsform einer Stoffaustauschkolonne 1. Die Stoffaustauschkolonne 1 kann eine Rektifikations- oder Luftzerlegungssäule sein. Unter Rektifikation ist ein thermisches Trennverfahren zu verstehen, das eine Erweiterung der Destillation oder eine Hintereinanderschaltung vieler Destillationsschritte darstellt. Gegenüber der Destillation sind die Vorteile der Rektifikation, dass die Anlage kontinuierlich betrieben werden kann und dass der Trenneffekt im Vergleich zur Destillation um ein vielfaches höher ist, da der Dampf im Gegenstrom mit der Flüssigkeit mehrfach hintereinander in Kontakt steht. Die Stoffaustauschkolonne 1 arbeitet somit energetisch günstiger, technisch weniger aufwändig und platzsparender als eine Hintereinanderschaltung von Einfachdestillationen.

Die Stoffaustauschkolonne 1 umfasst einen Behälter 2, der eine zylinderförmige Geometrie aufweist. Der Behälter 2 kann beispielsweise aus einem Aluminiumwerkstoff oder einem Stahlwerkstoff gefertigt sein. Vorzugsweise ist der Behälter 2 aus einem Aluminiumwerkstoff gefertigt. Der Behälter 2 ist zylinderförmig um eine Symmetrie-oder Mittelachse M₂ aufgebaut. Der Behälter 2 kann eine Höhe h₂ aufweisen. Die Höhe h₂ kann beispielsweise 30000 bis 50000 Millimeter betragen. Der Behälter 2 kann einen ersten Behälterabschnitt 3 mit einem Innendurchmesser d₃ und einen zweiten Behälterabschnitt 4 mit einem Innendurchmesser d₄ umfassen, wobei der Innendurchmesser d₃ kleiner als der Innendurchmesser d₄ ist. Beispielsweise kann der Innendurchmesser d₃ 7400 Millimeter und der Innendurchmesser d₄ 9400 Millimeter betragen. Der erste Behälterabschnitt 3 und der zweite Behälterabschnitt 4 können jeweils einen kreisrunden Querschnitt aufweisen.

Zwischen dem ersten Behälterabschnitt 3 und dem zweiten Behälterabschnitt 4 ist ein kegelstumpfförmiger dritter Behälterabschnitt 5 vorgesehen, der den ersten Behälterabschnitt 3 mit dem zweiten Behälterabschnitt 4 verbindet. Der erste Behälterabschnitt 3 ist mit Hilfe eines Deckels 6 stirnseitig verschlossen und der zweite Behälterabschnitt 4 ist mit Hilfe eines Bodens 7 stirnseitig verschlossen. An dem Behälter 2 kann zu Wartungszwecken und zur Montage von Einbauten in den Behälter 2 eine beliebige Anzahl an Mannlöchern 8 bis 12 vorgesehen sein. Die Mannlöcher 8 bis 12 können jeweils einen Durchmesser von beispielsweise 24 Zoll (600 Millimeter) oder 40 Zoll (1000 Millimeter) aufweisen.

Ferner weist der Behälter 2 einen an dem Deckel 6 vorgesehenen Gasauslass 13 und einen an dem Boden 7 vorgesehenen Flüssigkeitsauslass 14 auf. Im Betrieb der Stoffaustauschkolonne 1 werden über den Gasauslass 13 Leichtsieder und über den Flüssigkeitsauslass 14 Schwersieder abgeführt. Weiterhin sind an dem Behälter 2 ein Gaseinlass 15 und zwei Flüssigkeitseinlässe 16, 17 vorgesehen. In dem Behälter 2 sind Trageinrichtungen 18 bis 22 montiert, an denen Einbauten montiert sind und an denen sich Einbauten abstützen können. Die Trageinrichtungen 18 bis 22 sind fest mit dem Behälter 2 verbunden, beispielsweise verschweißt. Die Anzahl der Trageinrichtungen 18 bis 22 ist beliebig. Die Trageinrichtungen 18, 20, 21 können innenseitig um den Behälter 2 umlaufende Tragringe sein. Die Trageinrichtungen 19, 22 können innenseitig an dem Behälter 2 angebrachte Laschen sein, die gleichmäßig über einen Umfang des Behälters 2 angeordnet sein können. Der Behälter 2 kann auf einem Fundament 23 positioniert sein. Eine Höhe h₂₃ von einer Unterkante des Fundaments 23 bis zu dem zweiten Behälterabschnitt 4 kann 11600 Millimeter betragen.

Auf einer ersten Trageinrichtung 18 ist ein erstes Trag- oder Stützgitter 24 aufgelegt. Auf dem Stützgitter 24 ist eine erste strukturierte Packung 25 positioniert. Die erste Packung 25 kann eine Höhe h₂₅ von beispielsweise 1350 Millimetern aufweisen. Auf der ersten Packung 25 ist eine zweite strukturierte Packung 26 mit einer Höhe h₂₆ von beispielsweise 6050 Millimetern positioniert. Die Anzahl und die jeweilige Höhe h₂₅, h₂₆ der Packungen 25, 26 ist beliebig. Oberhalb der zweiten Packung 26 und insbesondere aufliegend auf der zweiten Packung 26 ist ein scheibenförmiger erster Niederhalter 27 vorgesehen. Der erste Niederhalter 27 kann ein Gitter sein und ist fluiddurchlässig. Der erste Niederhalter 27 kann mit einer zweiten Trageinrichtung 19 verbunden sein. Hierzu können Befestigungselemente 28, beispielsweise Schrauben, vorgesehen sein. An dem ersten Niederhalter 27 und/oder an der zweiten Trageinrichtung 19 können Langlöcher vorgesehen sein, in die die Befestigungselemente 28 eingreifen, so dass der erste Niederhalter 27 entlang einer Längsrichtung L₂ des Behälters 2, das heißt, entlang der Mittelachse M₂ höhenverstellbar ist.

In Längsrichtung L₂ oberhalb der zweiten Trageinrichtung 19 ist eine dritte Trageinrichtung 20 vorgesehen, auf der ein erster Flüssigkeitsverteiler 29 aufgelegt ist. Der erste Flüssigkeitsverteiler 29 kann auch direkt auf der zweiten Packung 26 aufgelegt sein. Oberhalb des ersten Flüssigkeitsverteilers 29 ist ein erster Vorverteiler 30 angebracht, dem über den Flüssigkeitseinlass 17 Flüssigkeit zugeführt werden kann. Auf einer vierten Trageinrichtung 21 ist ein zweites Trag- oder Stützgitter 31 aufgelegt, das eine dritte strukturierte Packung 32 trägt. Die dritte Packung 32 kann eine Höhe h₃₂ von 6050 Millimetern aufweisen.

Auf der dritten Packung 32 ist ein scheibenförmiger zweiter Niederhalter 33 vorgesehen. Der zweite Niederhalter 33 kann mit einer fünften Trageinrichtung 22 verbunden sein. Hierzu können wieder Befestigungselemente 28 vorgesehen sein. An dem zweiten Niederhalter 33 und/oder an der fünften Trageinrichtung 22 können Langlöcher vorgesehen sein, in die die Befestigungselemente 28 eingreifen, so dass der zweite Niederhalter 33 entlang der Längsrichtung L₂ des Behälters 2 höhenverstellbar ist. Oberhalb der dritten Packung 32 ist ein zweiter Flüssigkeitsverteiler 34 vorgesehen. Der zweite Flüssigkeitsverteiler 34 kann direkt auf der dritten Packung 32 aufgelegt sein. Über dem zweiten Flüssigkeitsverteiler 34 ist ein zweiter Vorverteiler 35 angebracht, dem über den Flüssigkeitseinlass 16 Flüssigkeit zugeführt werden kann.

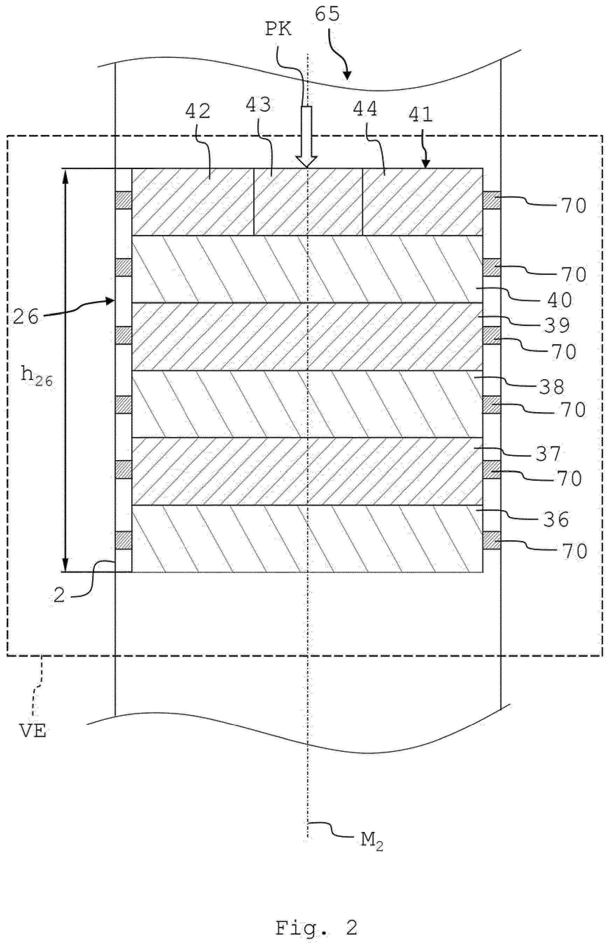

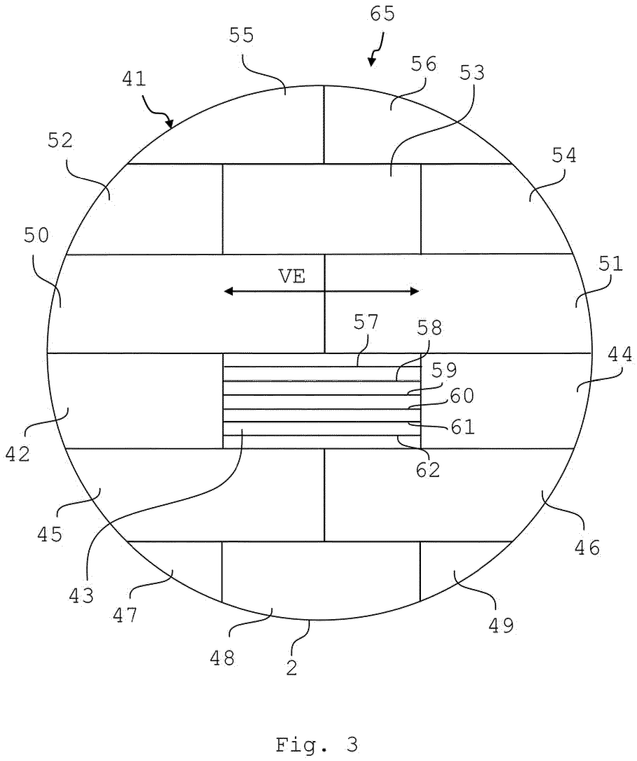

Die Fig. 2 zeigt eine schematische Schnittansicht der zweiten Packung 26. Die Fig. 3 zeigt eine Aufsicht der zweiten Packung 26. Die Packungen 25, 32 können einen identischen Aufbau wie die zweite Packung 26 haben. Bei geordneten oder strukturierten Packungen 25, 26, 32 werden Metallgewebe oder Bleche so gefaltet und/oder gewickelt, dass es zu einer intensiven Lenkung des Dampfes und der Flüssigkeit und damit verbundenem intensiven Kontakt beider kommt. Durch weitere Strukturierung der Oberfläche und durch die Anbringung von Löchern werden sowohl die Benetzbarkeit der Packungsoberfläche als auch der Stoffaustausch weiter erhöht. Bei den Packungen 25, 26, 32 handelt es sich um strukturierte Packungen. Im Folgenden wird nur auf die zweite Packung 26 Bezug genommen.

Die zweite Packung 26 kann eine Vielzahl geordneter oder strukturierter Packungslagen oder Packungsscheiben 36 bis 41 aufweisen, die übereinander angeordnet sind. Derartige Packungsscheiben 36 bis 41 bestehen aus dünnen, gewellten und/oder gelochten Metallplatten, beziehungsweise Drahtnetzen. Das Design der Packungsscheiben 36 bis 41 gewährleistet einen optimalen Austausch zwischen den unterschiedlichen Phasen (flüssig/gasförmig bzw. flüssig/flüssig) bei minimalem Druckwiderstand. Die Anzahl der Packungsscheiben 36 bis 41 ist beliebig. Die Packungsscheiben 36 bis 41 können aus senkrecht angeordneten Packungsblechen, insbesondere gewellten Aluminiumblechen, gefertigt sein. Die Packungsscheiben 36 bis 41 bilden aufgrund ihrer Struktur Kondensationsoberflächen, an denen beispielsweise bei der Luftzerlegung Luftbestandteile kondensieren können. Beispielsweise können die verwendeten Packungsbleche eine Dicke von 0,1 Millimeter aufweisen.

Jede Packungsscheibe 36 bis 41 ist in eine Vielzahl Packungselemente oder Packungspakete 42 bis 56 segmentiert. In der Orientierung der Fig. 2 ist nur die oberste Packungsscheibe 41 segmentiert dargestellt. Die Anzahl der Packungspakete 42 bis 56 pro Packungsscheibe 36 bis 41 ist beliebig. Die Packungsscheiben 36 bis 41 weisen jeweils eine Dicke von 200 bis 250 Millimetern auf. Die Packungsscheiben 36 bis 41 sind fugenlos aufeinander und die Packungspakete 42 bis 56 sind fugenlos aneinander gelegt. Wie zuvor erwähnt, ist jedes Packungspaket 42 bis 56, wie in der Fig. 3 anhand des Packungspakets 43 gezeigt, aus einer Vielzahl parallel angeordneter Packungsbleche 57 bis 62 aufgebaut. Die Packungsbleche 57 bis 62 sind parallel zu einer Vorzugsebene VE ausgerichtet. Alle Packungsbleche 57 bis 62 aller Packungspakete 42 bis 56 einer Packungsscheibe 36 bis 41 sind in der Vorzugsebene VE ausgerichtet. Auch alle Packungsbleche 57 bis 62 aller Packungsscheibe 36 bis 41 einer Packung 25, 26, 32 können in der Vorzugsebene VE ausgerichtet sein. Ferner können die Vorzugsebenen VE zweier benachbarter Packungsscheiben 36 bis 41 auch senkrecht zueinander angeordnet sein.

Die Packungsscheiben 36 bis 41 sind fugenlos aufeinander und die Packungspakete 42 bis 56 sind fugenlos aneinander gelegt. Um auch im Betrieb der Stoffaustauschkolonne 1 die Fugenfreiheit der Packungen 25, 26, 32 zu gewährleisten sind die Niederhalter 27, 33 so ausgeführt, dass diese kontinuierlich auf die Packungen 25, 26, 32 drücken und so eine Spaltbildung verhindern oder vorhandene Spalte geschlossen werden. Die dazu notwendige Kraft kann über verschiedene Systeme aufgebracht werden. Hierbei wird eine erforderliche Presskraft PK auf die Packungen 25, 26, 32 aufgebracht und über die Trageinrichtungen 18, 21 in den Behälter 2 eingeleitet. Hierbei wird die Presskraft PK dynamisch aufgebracht. Das heißt, die Größe der nach unten in Richtung des Fundaments 23 wirkenden Presskraft PK bleibt im Betrieb der Stoffaustauschkolonne 1 annähernd konstant, auch wenn sich die oberste Packungsscheibe 41 eine gewisse Strecke, beispielsweise mehrere Millimeter bis Zentimeter, in der Längsrichtung L₂ nach oben oder unten bewegt.

Dieses dynamische Aufbringen der Presskraft PK unterscheidet sich somit vom bekannten statischen System, bei dem ein fest eingebauter Niederhalter nur an einem ganz bestimmten Punkt eine Kraft auf die Packung aufbringt. Ein Niederhalter, der nur statisch oberhalb der obersten Packungsscheibe fixiert ist, erfüllt seine Funktion nur bedingt. Das heißt, kleine Toleranzen beim Anbringen des Niederhalters können dazu führen, dass Spielraum für eine Bewegung der Packungsscheiben entsteht. Das statische Aufbringen der Kraft kann somit zur Folge haben, dass eine Oberkante der Packung nicht am Niederhalter anliegt. Aufgrund des Spalts gibt es keinen Kontakt zwischen der Oberkante und dem Niederhalter. Deshalb wird die Packung auch nicht nach unten gedrückt. Bewegt sich die Packung nach oben, erfolgt ein Kontakt und die Packung wird durch den Niederhalter nur örtlich festgehalten. Dadurch, dass bei bekannten Anordnungen keine dynamische Presskraft PK ausgeübt wird, kann ein Verschieben der Packungsscheiben und der Packungspakete, beispielsweise beim Fluten der Stoffaustauschkolonne oder bei Gasdruckstößen, nicht vollständig verhindert werden.

Verschiebungen können zum Entstehen von Spalten zwischen den Packungsscheiben und den einzelnen Packungspakete einer Packungsscheibe führen, wodurch die nachfolgenden Effekte auftreten können. Beim Ablaufen des Flüssigkeitsfilms von einer Packungsscheibe in die 90° gedrehte nächste darunterliegende Packungsscheibe bildet sich an der Unterseite jedes Packungsblechs eine Tropfnase, die den Strömungsquerschnitt für das Gas reduziert. Die Breite der Tropfnase hängt davon ab, wie weit die nächste Kontaktstelle zum darunter liegenden Packungsblech entfernt ist. Das heißt, die Größe des Spaltes hat einen direkten Einfluss auf die Gaskapazität. Ein Spalt zwischen zwei Packungsscheiben stört somit das Ablaufen der Flüssigkeit von der oberen zur unteren Packungsscheibe, da sich die Flüssigkeit an der Unterkante der Packungsscheibe zu einem Tropfen sammeln muss und erst nach Erreichen des notwendigen Abtropfgewichtes weiterfließt. Durch die Tropfenbildung wird die freie Querschnittsfläche für die Gasströmung reduziert, wodurch sich die Gasgeschwindigkeit und der Druckverlust erhöhen. Ab einer gewissen Gasgeschwindigkeit wird die Flüssigkeit mitgerissen und ein vorzeitiges Fluten an den Packungsscheiben stellt sich ein.

Falls sich zwischen den Packungsscheiben horizontale Spalte befinden, dann kann Flüssigkeit entlang einer Packungsblechunterkante verschoben werden, wodurch eine Gas- und Flüssigkeitsmaldistribution generiert werden kann. Ferner kann die Gasmaldistribution dadurch gefördert werden, dass Spalte zwischen den Packungspaketen einen Bypass darstellen in dem eine übergroße Gasmenge nach oben strömen kann. Die Flüssigkeitsmaldistribution kann dadurch gefördert werden, dass sich Flüssigkeit sich entlang von Spalten sammelt und dann an einem Ort weiter nach unten strömt. Das heißt, die gleichmäßige Verteilung der Flüssigkeit über den Querschnitt der Packung wird beeinträchtigt. Es kann ein frühzeitiges Fluten und damit eine Reduzierung der Kapazität der Stoffaustauschkolonne begünstigt werden. Durch Gas- und/oder Flüssigkeitsmaldistribution kann es zu einem Wirksamkeitsverlust kommen.

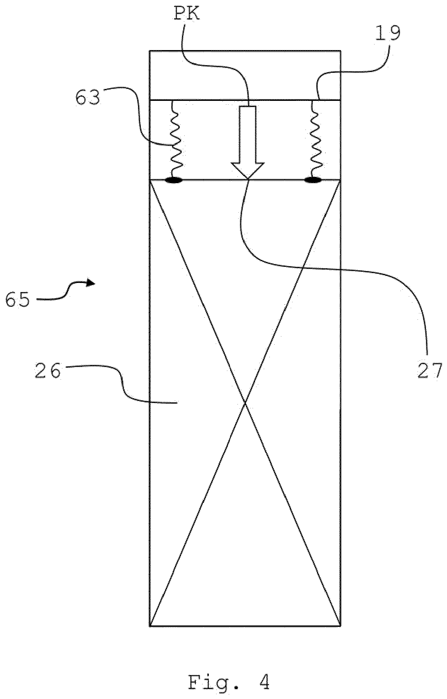

Um die zuvor genannten Nachteile zu vermeiden, wird bei der Stoffaustauschkolonne 1 gemäß der Fig. 1 die Presskraft PK, wie zuvor erwähnt dynamisch aufgebracht. Das dynamische Aufbringen der Presskraft PK kann, wie in der Fig. 4 gezeigt, mit Hilfe von Federelementen 63 erfolgen. Vorzugsweise ist eine Vielzahl Federelemente 63 vorgesehen, die gleichmäßig über einen Umfang der Packungsscheibe 41 verteilt angeordnet sind. Die Federelemente 63 können Druckfedern sein. Der erste Niederhalter 27 ist nicht direkt an der zweiten Trageinrichtung 19 befestigt, sondern es sind zwischen der zweiten Trageinrichtung 19 und dem ersten Niederhalter 27 die Federelemente 63 eingebaut, die den ersten Niederhalter 27 kontinuierlich auf die zweite Packung 26 pressen. Auch bei einer Bewegung der zweiten Packung 26 in der Orientierung der Fig. 4 nach oben oder unten bleiben die Federelemente 63 gespannt und es wirkt kontinuierlich die Presskraft PK auf die zweite Packung 26, wodurch die zweite Packung 26 stets optimal zusammengepresst bleibt. Hierzu werden die Federelemente 63 mit einer definierten Kraft vorgespannt, die abhängig von der mechanischen Stabilität der zweiten Packung 26 und den zu erwartenden hydrodynamischen Kräften ist. Der Einsatz von Federelementen 63 hat den Vorteil, dass diese nur wenig Querschnittsfläche des Behälters 2 verdecken und deshalb nicht dimensionierend für den jeweiligen Innendurchmesser d₃, d₄ des Behälters 2 sind.

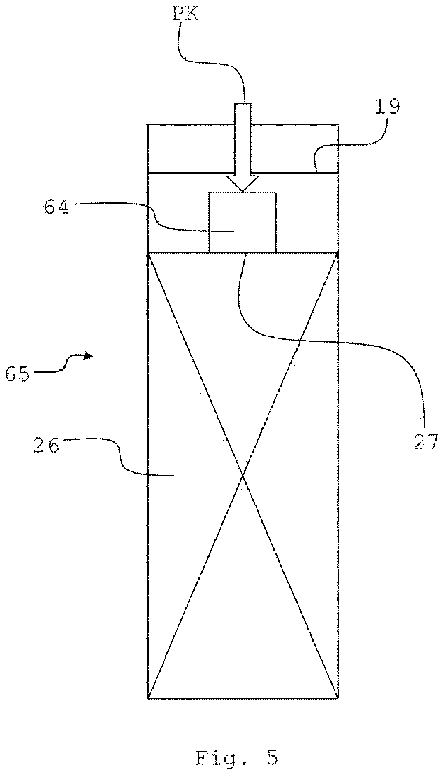

Alternativ kann die Presskraft PK auch anstelle mit Hilfe der Federelemente 63 durch ein Gewicht aufgebracht werden. Beispielsweise kann der erste Niederhalter 27 in einer besonders schweren Konstruktion ausgeführt werden und lose auf der obersten Packungsscheibe 41 aufliegen. Ferner kann der erste Flüssigkeitsverteiler 29 oberhalb der zweiten Packung 26 nicht an der dritten Trageinrichtung 20 montiert sein sondern auf den ersten Niederhalter 27 aufgelegt sein. Damit kann das Eigengewicht des ersten Flüssigkeitsverteilers 29, des ersten Niederhalters 27 und das Gewicht der Flüssigkeit im ersten Flüssigkeitsverteiler 29 als Presskraft PK genutzt werden. Um eine horizontale Ebenheit des ersten Flüssigkeitsverteiler 29 zu gewährleisten, was für eine gleichmäßige Flüssigkeitsverteilung notwendig ist, wird dieser mittels Führungen einjustiert. Hiermit kann beispielsweise eine Presskraft von bis zu 3000 N/m² (30 mbar bzw. ca. 300 kg/m²) erreicht werden. Weiterhin können, wie in der Fig. 5 gezeigt, zusätzliche Gewichte 64 auf den ersten Niederhalter 27 und/oder den ersten Flüssigkeitsverteiler 29 aufgelegt werden. Die Gewichte 64 werden so positioniert und befestigt, dass sie nicht oder nur kaum die Gas- oder die Flüssigkeitsströmung behindern. Der Behälter 2, die zweite Packung 26, der erste Niederhalter 27, der erste Flüssigkeitsverteiler 29 und/oder die Gewichte 64 können eine Packungsanordnung 65 der Stoffaustauschkolonne 1 bilden.

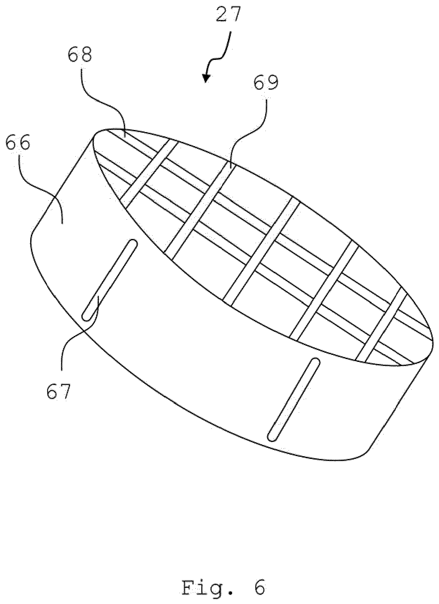

Eine Ausführungsform des ersten Niederhalters 27 ist in der Fig. 6 gezeigt. Der zweite Niederhalter 33 kann baugleich wie der erste Niederhalter 27 ausgebildet sein. Der erste Niederhalter 27 umfasst einen ringförmigen umlaufenden Basisabschnitt 66, der mit den Federelementen 63 oder über Langlöcher 67 verstellbar mit der zweiten Trageinrichtung 19 verbunden ist. Weiterhin umfasst der erste Niederhalter 27 sich überkreuzende Querstreben 68 und Längsstreben 69, die gitterförmig angeordnet sind. der erste Niederhalter 27 kann also ein Gitter sein.

Die Vermeidung von Spalten und ebenso das Entstehen von Spalten während des Betriebs der Stoffaustauschkolonne 1 kann auch vermieden werden, indem die zweite Packung 26 nicht locker, sondern besonders sorgfältig, homogen und unter Spannung eingebaut wird. Dazu werden die vorgefertigten Packungspakete 43 bis 56 während des Einbaus sowohl an eine Innenwandung des Behälters 2 als auch gegeneinander gedrückt und mit einzelnen Packungsblechen 57 bis 62 verkeilt bzw. eingespreizt. Zwischen dem Behälter 2 und der zweiten Packung 26 bzw. jeder Packungsscheibe 36 bis 41 kann noch ein umlaufender Packungskragen oder Dichtkragen 70 (Fig. 2) vorgesehen sein.

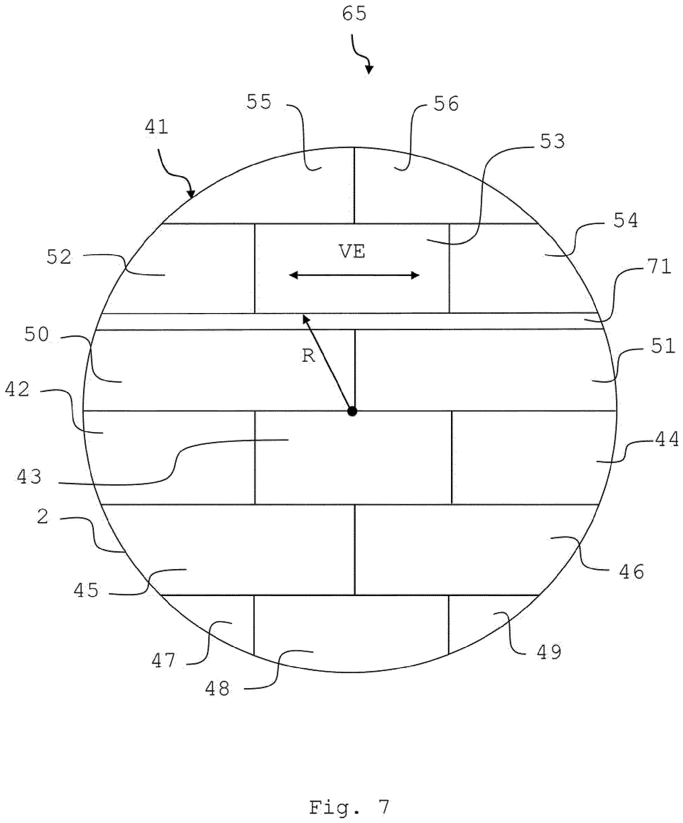

Beispielsweise kann sich, wie in der Fig. 7 gezeigt, beim Montieren der Packungsscheibe 41, das heißt, bei dem Einlegen der Packungspakete 43 bis 56 in den Behälter 2 und beim fugenfreien Aneinanderdrücken der Packungspakete 43 bis 56 zwischen den Packungspaketen 52, 53, 54 und den Packungspaketen 50, 51 ein parallel zu der Vorzugsebene VE verlaufender Spalt 71 bilden. In den Spalt 71 werden ein oder mehrere Packungsbleche 57 bis 62 eingefügt, um die Packungsscheiben 36 bis 41 in dem Behälter 2 zu verspannen. Zum Einfügen der Packungsbleche 57 bis 62 können glatte, das heißt, ungewellte oder unstrukturierte Hilfsbleche eingesetzt werden. Die Hilfsbleche werden hierzu in den Spalt 71 eingeführt und die Packungsbleche 57 bis 62 werden entlang der Hilfsbleche in den Spalt 71 eingedrückt. Die Packungsbleche 57 bis 62 werden ausschließlich in Richtung der Vorzugsebene VE orientiert eingebaut. Alle Packungsscheiben 36 bis 41 und alle Packungen 25, 26, 32 werden auf dieselbe Art und Weise montiert.

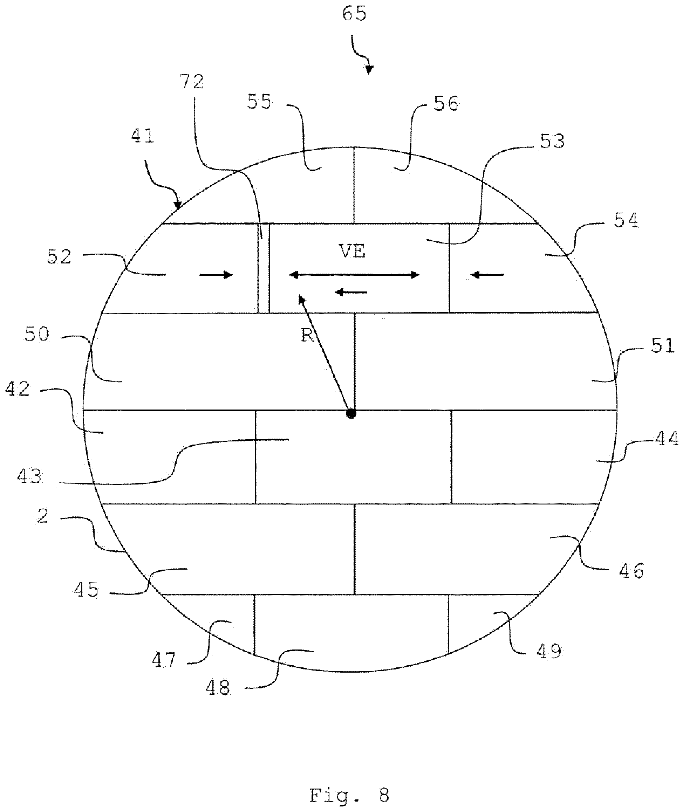

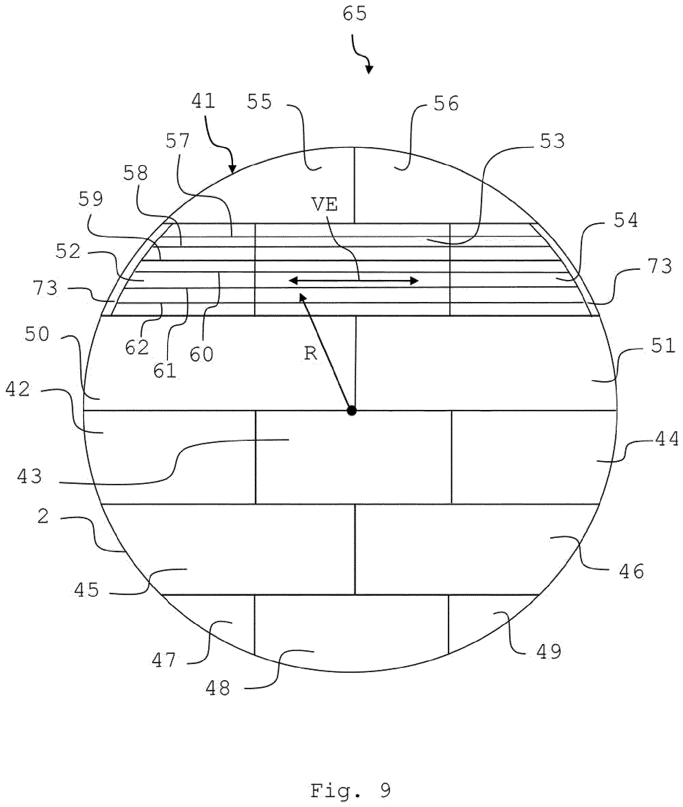

Wie in der Fig. 8 gezeigt kann sich beim Montieren der Packungspakete 43 bis 56 auch ein Spalt 72 bilden, der senkrecht zu der Vorzugsebene VE orientiert ist. Beispielsweise kann der Spalt 72 zwischen den Packungspaketen 52 und 53 vorgesehen sein. Um den Spalt 72 zu schließen ist es nicht möglich, Packungsbleche 57 bis 62 in diesen einzufügen, da die Packungsbleche 57 bis 62 dann senkrecht zu der Vorzugsebene VE orientiert wären und eine Barriere in der jeweiligen Packungsscheibe 36 bis 41 bilden würden. Stattdessen wird, wie in der Fig. 9 gezeigt, der Spalt 72 dadurch geschlossen, dass die Packungspakete 52 bis 54 in parallel zu der Vorzugsebene VE zusammengeschoben werden. Durch das Zusammenschieben der Packungspakete 52 bis 54 bildet bzw. bilden sich umfängliche Spalte 73.

Um den oder die umfänglichen Spalte 73 zu schließen, werden in einer Radialrichtung R des Behälters 2 bzw. der Packungsscheibe 41 außenliegende Packungsbleche 57, 58 aller Packungspakete 52 bis 54 entfernt und die Packungspakete 52 bis 54 in der Radialrichtung R nach außen verschoben bis die Spalte 73 geschlossen sind und die Packungspakete 52, 54 sich an den Behälter 2 anschmiegen. Die Anzahl der entfernten Packungsbleche 57, 58 ist beliebig und hängt von der Größe der Spalte 73 ab. Durch das Verschieben der Packungspakete 52 bis 54 radial nach außen entsteht wieder ein in der Vorzugsebene VE verlaufender Spalt 71. Dieser kann, wie zuvor erläutert, mit Hilfe eingeschobener Packungsbleche 57 bis 62 geschlossen werden. Zum Schließen des Spalts 71 können auch die von den Packungspakete 52 bis 54 entfernten Packungsbleche 57, 58 verwendet werden.

Durch die Benutzung der Packungsbleche 57 bis 62 zum Schließen des Spalts 71 können unter Berücksichtigung des Dichtkragens 70 gezielt die Toleranzen des Behälters 2 und der Packungspakete 42 bis 46 ausgeglichen werden. Dadurch entstehen sehr homogene Packungsscheiben 36 bis 41, die sich lückenlos innenseitig an den Behälter 2 anschmiegen und bei denen auch keinerlei Stöße zwischen den Packungspaketen 43 bis 56 vorhanden und sichtbar sind. Während des Einbaus mehrerer übereinander liegender Packungen 25, 26 wird ebenfalls darauf geachtet, dass die zweite Packung 26 fest an die darunterliegende erste Packung 25 gepresst wird und alle Spalte 71 bis 73 geschlossen werden. Durch diesen besonderen Einbauvorgang ist jede Packung 25, 26, 32 in ihrer Lage eingezwängt und kann daher auch beim Fluten oder Gasstößen nicht verschoben werden.

Eine langsame Lockerung der Packungen 25, 26, 32 wird durch die Niederhalter 27, 33 verhindert. Diese sind bei dieser Konstellation fest eingebaut, da die Packungen 25, 26, 32 intern verspannt sind und es ausreichend ist, dass diese Vorspannung aufrechterhalten wird. Deshalb sind hier keine Federelemente oder Gewichte auf dem jeweiligen Niederhalter 27, 33 notwendig. Ist eine weitere Erhöhung der Spannung innerhalb der Packungen 25, 26, 32 erwünscht, können diese vor der Montage des jeweiligen Niederhalters 27, 33 mittels Gewichten 64 oder durch äußere Pressung, beispielsweise mit Hilfe eines Hydraulikzylinders, verdichtet werden. Im verdichteten Zustand unter Pressung wird dann der jeweilige Niederhalter 27, 33 fixiert und die Pressung anschließend wieder entfernt.

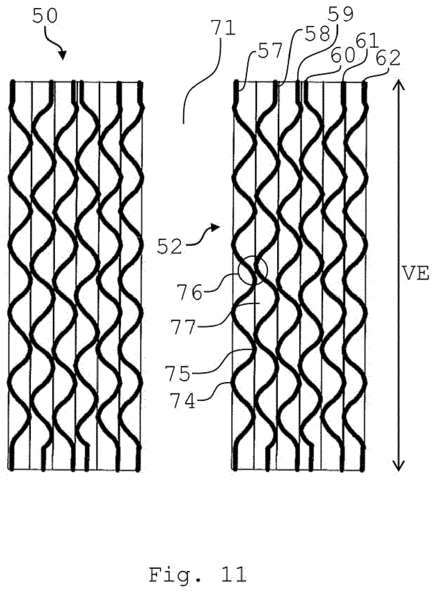

Die Fig. 11 zeigt eine schematische Ansicht zweier Packungspakete 50, 52 sowie eines zwischen diesen vorgesehenen Spalts 71. Jedes Packungspaket 50, 52 ist, wie zuvor bereits erwähnt, aus mehreren Packungsblechen 57 bis 62 aufgebaut, die miteinander verbunden sind. Jedes Packungsblech 57 bis 62 ist gewellt und weist Wellenberge 74 und sich mit den Wellenbergen 74 abwechselnde Wellentäler 75 auf. Die Wellenberge 74 benachbarter Packungsbleche 57, 58 kontaktieren sich an Kontaktbereichen 76.

Zwischen benachbarten Packungsblechen 57, 58 werden definierte Kanäle 77 gebildet werden, in denen Gas und/oder Flüssigkeit strömen kann. Der Spalt 71 ist vorliegend definiert als ein Bereich zwischen Packungspaketen 50, 52 oder Packungsblechen 57 bis 62, in dem diese sich nicht kontaktieren und in dem keine Kontaktbereiche 76 vorgesehen sind. Das heißt, in oder an dem Spalt 71 berühren sich die Packungspakete 50, 52 oder Packungsbleche 57 bis 62 nicht. In dem Spalt 71 werden demnach auch keine der zuvor genannten Kanäle 77 für Gas und/oder Flüssigkeit gebildet. Ein derartiger Spalt 71 kann eine quaderförmige Geometrie aufweisen.

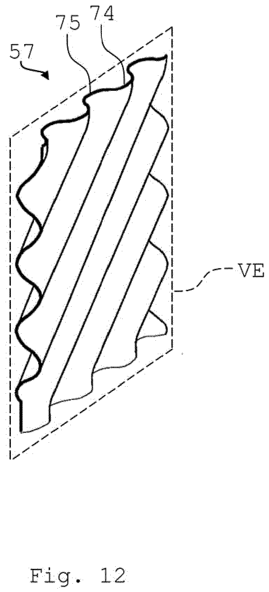

Die Fig. 12 zeigt eine schematische perspektivische Ansicht eines Packungsblechs 57. Wie zu erkennen ist, sind die Wellentäler 75 und die Wellenberge 74 vorzugsweise schräg zu der Mittelachse M₂, beispielsweise in einem Winkel von 45°, orientiert.

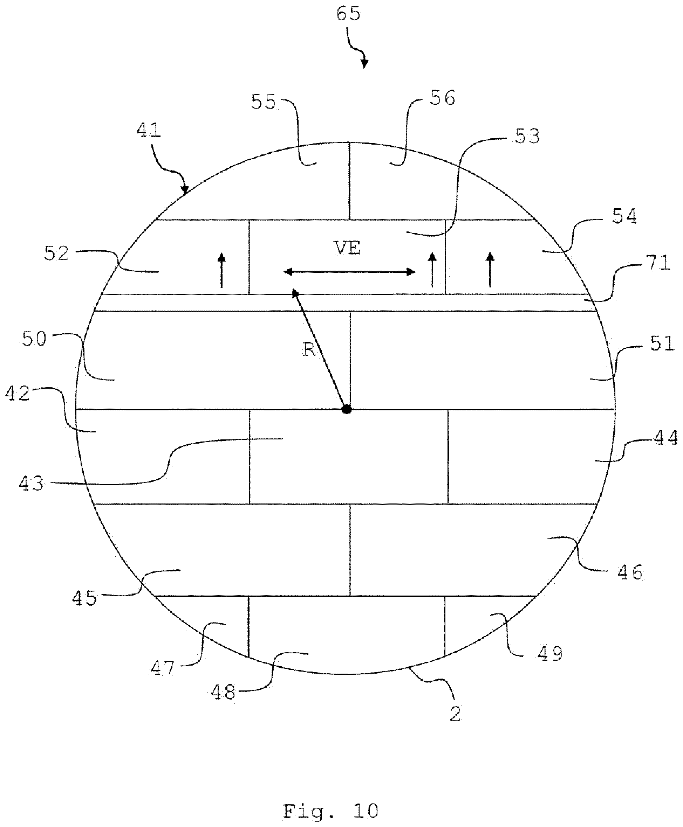

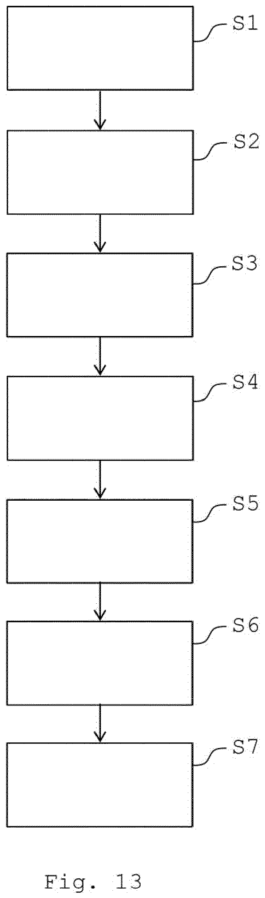

Ein in der Fig. 13 gezeigtes Verfahren zum Herstellen der Packungsanordnung 65 kann die folgenden beispielhaften Schritte aufweisen: Ein Schritt S1 kann das Bereitstellen des Behälters 2 umfassen. Ein Schritt S2 weist das Bereitstellen von Packungspaketen 42 bis 56 auf und ein Schritt S3 umfasst das Bereitstellen von zusätzlichen Packungsblechen 57 bis 62. In einem Schritt S4 werden die Packungspakete 42 bis 56 zum Bilden einer Packungsscheibe 36 bis 41 in den Behälter 2 eingebaut. In einem Schritt S5 werden die zusätzlichen Packungsbleche 57 bis 62 zwischen die Packungspakete 42 bis 56 derart eingefügt, dass die zumindest eine Packungsscheibe 36 bis 41 in der Radialrichtung R des Behälters 2 gegen diesen vorgespannt ist. Das Verfahren kann, wie zuvor mit Bezug auf die Fig. 7 bis 10 erläutert, auch einen Schritt S6 des Schließens von in der Vorzugsebene VE orientierten Spalten 71 und senkrecht zu der Vorzugsebene VE orientierten Spalten 72 umfassen. Dabei werden Packungsbleche 57 bis 62 in einem Schritt S7 ausschließlich in die Spalte 71 eingefügt, die in oder parallel zu der Vorzugsebene VE orientiert sind. Die Spalte 72, die senkrecht zu der Vorzugsebene VE orientiert sind, werden durch ein Verschieben der Packungspakete 42 bis 56 in der Vorzugsebene VE geschlossen.

Bei dem Verfahren werden die zusätzlichen Packungsbleche 57 bis 62 immer paarweise eingefügt. Es können auch mehrere Paare an zusätzlichen Packungsblechen 57 bis 62, beispielsweise vier zusätzliche Packungsbleche 57 bis 62 oder sechs zusätzliche Packungsbleche 57 bis 62, eingefügt werden. Das heißt, die Anzahl der eingefügten zusätzlichen Packungsbleche 57 bis 62 ist geradzahlig. Die zusätzlichen Packungsbleche 57 bis 62 sind gewellt. Die beiden zusätzlichen Packungsbleche 57 bis 62 eines Paares an zusätzlichen Packungsblechen 57 bis 62 sind dabei so angeordnet, dass sich die Wellenberge 74 und die Wellentäler 75 der Packungsbleche 57 bis 62 überkreuzen und beispielsweise in einem Winkel von 90° zueinander angeordnet sind. Die beiden zusätzlichen Packungsbleche 57 bis 62 eines Paares an zusätzlichen Packungsblechen 57 bis 62 kontaktieren sich dann an den Wellenbergen 74.

Kapazitätseinbußen und/oder Wirkungsgradeinbußen aufgrund von Spalten 71 bis 73 innerhalb der Packungen 25, 26, 32 werden verhindert. Dadurch ist ein optimiertes Design der Stoffaustauschkolonne 1 mit niedrigeren Sicherheitszuschlägen durchführbar. Das heißt, die Stoffaustauschkolonne 1 kann mit kleinerem Innendurchmesser d₃, d₄ bei gleicher Leistung ausgelegt werden. Die Anwendung vorgespannter Packungen 25, 26, 32 kann überall dort erfolgen, wo strukturierte Packungen eingesetzt werden, beispielsweise in Behältern für 2- oder 3-Phasentrennung, Kühltürmen oder dergleichen.

Obwohl die vorliegende Erfindung anhand von Ausführungsbeispielen beschrieben wurde, ist sie vielfältig modifizierbar.

### Verwendete Bezugszeichen

- 1: Stoffaustauschkolonne
- 2: Behälter
- 3: Behälterabschnitt
- 4: Behälterabschnitt
- 5: Behälterabschnitt
- 6: Deckel
- 7: Boden
- 8: Mannloch
- 9: Mannloch
- 10: Mannloch
- 11: Mannloch
- 12: Mannloch
- 13: Gasauslass
- 14: Flüssigkeitsauslass
- 15: Gaseinlass
- 16: Flüssigkeitseinlass
- 17: Flüssigkeitseinlass
- 18: Trageinrichtung
- 19: Trageinrichtung
- 20: Trageinrichtung
- 21: Trageinrichtung
- 22: Trageinrichtung
- 23: Fundament
- 24: Stützgitter
- 25: Packung
- 26: Packung
- 27: Niederhalter
- 28: Befestigungselement
- 29: Flüssigkeitsverteiler
- 30: Vorverteiler
- 31: Stützgitter
- 32: Packung
- 33: Niederhalter
- 34: Flüssigkeitsverteiler
- 35: Vorverteiler
- 36: Packungsscheibe
- 37: Packungsscheibe
- 38: Packungsscheibe
- 39: Packungsscheibe
- 40: Packungsscheibe
- 41: Packungsscheibe
- 42: Packungspaket
- 43: Packungspaket
- 44: Packungspaket
- 45: Packungspaket
- 46: Packungspaket
- 47: Packungspaket
- 48: Packungspaket
- 49: Packungspaket
- 50: Packungspaket
- 51: Packungspaket
- 52: Packungspaket
- 53: Packungspaket
- 54: Packungspaket
- 55: Packungspaket
- 56: Packungspaket
- 57: Packungsblech
- 58: Packungsblech
- 59: Packungsblech
- 60: Packungsblech
- 61: Packungsblech
- 62: Packungsblech
- 63: Federelement
- 64: Gewicht
- 65: Packungsanordnung
- 66: Basisabschnitt
- 67: Langloch
- 68: Querstrebe
- 69: Längsstrebe
- 70: Dichtkragen
- 71: Spalt
- 72: Spalt
- 73: Spalt
- 74: Wellenberg
- 75: Wellental
- 76: Kontaktbereich
- 77: Kanal

- d₃: Innendurchmesser
- d₄: Innendurchmesser
- h₂: Höhe
- h₂₃: Höhe
- h₂₅: Höhe
- h₂₆: Höhe
- h₃₂: Höhe
- L₂: Längsrichtung
- M₂: Mittelachse
- PK: Presskraft
- R: Radialrichtung
- S1: Schritt
- S2: Schritt
- S3: Schritt
- S4: Schritt
- S5: Schritt
- VE: Vorzugsebene

## Patentansprüche

1. Verfahren zum Herstellen einer Packungsanordnung (65), mit folgenden Schritten:
Bereitstellen (S1) eines Behälters (2);
Bereitstellen (S2) von Packungspaketen (42 - 56), wobei jedes Packungspaket (42 - 56) miteinander verbundene Packungsbleche (57 - 62) umfasst;
Einbau (S4) der Packungspakete (42 - 56) in den Behälter (2) zum Bilden zumindest einer Packungsscheibe (36 - 41);
**gekennzeichnet durch:**
Bereitstellen (S3) von zusätzlichen, gewellten, losen Packungsblechen (57 - 62);
Einfügen (S5) der zusätzlichen Packungsbleche (57 - 62) zwischen die Packungspakete (42 - 56) derart, dass die zumindest eine Packungsscheibe (36 - 41) in einer Radialrichtung (R) des Behälters (2) gegen diesen vorgespannt wird, sowohl die Packungsbleche (57 - 62) der Packungspakete (42 - 56) als auch die zwischen die Packungspakete (42 - 56) eingefügten zusätzlichen Packungsbleche (57 - 62) ausschließlich in einer oder parallel zu einer gemeinsamen Vorzugsebene (VE) angeordnet werden, wobei die Packungspakete (42 - 56) zum Schließen von senkrecht zu der Vorzugsebene (VE) und zwischen den Packungspaketen (42 - 56) angeordneten Spalten (72) zunächst senkrecht zu der Vorzugsebene (VE) aufeinander zu und
anschließend in der Radialrichtung (R) nach außen bis die Packungspakete (42 - 56) den Behälter (2) kontaktieren verschoben werden, um einen Spalt (71) zu bilden, der parallel zu der Vorzugsebene (VE) angeordnet ist und wobei der Spalt (71), der parallel zu der Vorzugsebene (VE) angeordnet ist, mit den zusätzlichen, gewellten, losen Packungsblechen (57 - 62) geschlossen wird.

2. Verfahren nach Anspruch 1, wobei mehrere Packungsscheiben (36 - 41) durch das Aufbringen einer Presskraft (PK) zusammengedrückt werden.

3. Verfahren nach Anspruch 2 oder 3, wobei die zusätzlichen Packungsbleche (57 - 62) paarweise zwischen die Packungspakete (42 - 56) eingefügt werden.

4. Verfahren nach einem der Ansprüche 2 - 3, wobei die zusätzlichen Packungsbleche (57 - 62) aus den Packungspaketen (42 - 56) entnommen werden.

5. Packungsanordnung (65) für eine Stoffaustauschkolonne (1), mit zumindest einer strukturierten Packungsscheibe (36 - 41) und einem Behälter (2), in dem die zumindest eine strukturierte Packungsscheibe (36 - 41) angeordnet ist, wobei die zumindest eine strukturierte Packungsscheibe (36 - 41) Packungspakete (42 - 56) aufweist, wobei jedes Packungspaket (42 - 56) miteinander verbundene Packungsbleche (57 - 62) umfasst, wobei die Packungsbleche (57 - 62) gewellt sind und Wellenberge (74) und Wellentäler (75) aufweisen, wobei sich benachbarte Packungsbleche (57 - 62) an den Wellenbergen (74) berühren, wobei die Packungspakete (42 - 56) spaltfrei aneinander gefügt sind, **dadurch gekennzeichnet, dass** zwischen den Packungspaketen (42 - 56) zusätzliche, gewellte, lose Packungsbleche (57 - 62) so eingefügt sind, dass die zumindest eine Packungsscheibe (36 - 41) in einer Radialrichtung (R) des Behälters (2) gegen diesen vorgespannt ist, und wobei sowohl die gewellten Packungsbleche (57 - 62) der Packungspakete (42 - 56) als auch die zwischen die Packungspakete (42 - 56) eingefügten zusätzlichen, gewellten, losen Packungsbleche (57 - 62) ausschließlich in einer oder parallel zu einer gemeinsamen Vorzugsebene (VE) angeordnet sind.

6. Packungsanordnung Anspruch 5, wobei mehrere strukturierte Packungsscheiben (36 - 41) eine strukturierte Packung (25, 26, 32) bilden.

7. Packungsanordnung nach Anspruch 6, wobei die strukturierten Packungsscheiben (36 - 41) der strukturierten Packung (25, 26, 32) in einer Längsrichtung (L₂) des Behälters (2) mit einer Presskraft (PK) beaufschlagt sind, wobei die Presskraft (PK) mit Hilfe eines auf die strukturierte Packung (25, 26, 32) aufgelegten Niederhalters (27, 33), einem auf die strukturierte Packung (25, 26, 32) aufgelegten Flüssigkeitsverteiler (29, 34) und/oder eines auf die strukturierte Packung (25, 26, 32) aufgelegten Gewichts (64) aufbringbar ist.

8. Packungsanordnung nach Anspruch 7, wobei der Niederhalter (27, 33) verstellbar an einer Trageinrichtung (19, 22) des Behälters befestigt ist.

9. Packungsanordnung nach Anspruch 8, wobei an dem Niederhalter (27, 33) Langlöcher (67) vorgesehen sind, in denen zum Verstellen des Niederhalters (27, 33) Befestigungselemente (28) verlagerbar aufgenommen sind.

10. Packungsanordnung nach einem der Ansprüche 8 - 9, wobei der Niederhalter (27, 33) zum Aufbringen der Presskraft (PK) mit Hilfe von Federelementen (63) in Richtung auf die strukturierte Packung (25, 26, 32) zu federvorgespannt ist.

11. Stoffaustauschkolonne (1) mit einer Packungsanordnung (65) nach einem der Ansprüche 5 - 10.

## Claims

1. A method for producing a package assembly (65), having the following steps:
providing (S1) a container (2);
providing (S2) packaging packages (42 - 56), wherein each packaging package (42 - 56) comprises packing sheets (57 - 62) connected to one another;
installing (S4) the packaging packages (42 - 56) in the container (2) to form at least one package disk (36 - 41);
**characterized by:**
providing (S3) additional, corrugated, loose packing sheets (57 - 62);
inserting (S5) the additional packing sheets (57 - 62) between the packaging packages (42 - 56) such that the at least one package disk (36 - 41) is pretensioned in a radial direction (R) of the container (2) against said container (2), both the packing sheets (57 - 62) of the packaging packages (42 - 56) as well as the additional packing sheets (57 - 62) inserted between the packaging packages (42 - 56) being arranged exclusively in, or parallel to, a common preferential plane (VE), wherein the packaging packages (42 - 56) are first displaced perpendicular to the preferential plane (VE), and subsequently outward in the radial direction (R) until the packaging packages (42 - 56) contact the container (2), to close gaps (72) arranged perpendicular to the preferential plane (VE) and between the packaging packages (42 - 56), in order to form a gap (71) arranged parallel to the preferential plane (VE); and wherein the gap (71), which is arranged parallel to the preferential plane (VE), is closed with the additional corrugated loose packing sheets (57 - 62).

2. The method according to claim 1, wherein a plurality of package disks (36 - 41) are compressed by applying a pressing force (PK).

3. The method according to claim 2 or 3, wherein the additional packing sheets (57 - 62) are inserted in pairs between the packaging packages (42 - 56).

4. The method according to one of claims 2 - 3, wherein the additional packing sheets (57 - 62) are removed from the packaging packages (42 - 56).

5. A package assembly (65) for a mass transfer column (1), having at least one structured package disk (36 - 41) and a container (2) in which the at least one structured package disk (36 - 41) is arranged, wherein the at least one structured package disk (36 - 41) has packaging packages (42 - 56); wherein each packaging package (42 - 56) has packing sheets (57 - 62) connected to one another; wherein the packing sheets (57 - 62) are corrugated and have wave peaks (74) and wave troughs (75); wherein adjacent packing sheets (57 - 62) touch at the wave peaks (74); wherein the packaging packages (42 - 56) are joined to one another without gaps; **characterized in that** additional corrugated loose packing sheets (57-62) are inserted between the packaging packages (42 - 56) so that the at least one package disk (36 - 41) is pretensioned in a radial direction (R) of the container (2) against said container (2); and wherein both the corrugated packing sheets (57 - 62) of the packaging packages (42 - 56) as well as additional corrugated loose package sheets (57 - 62) inserted between the package packages (42 - 56) are arranged exclusively in, or parallel to, a common preferential plane (VE).

6. The package assembly according to claim 5, wherein a plurality of structured package disks (36 - 41) form a structured package (25, 26, 32).

7. The package assembly according to claim 6, wherein the structured package disks (36 - 41) of the structured package (25, 26, 32) are charged with a pressing force (PK) in a longitudinal direction (L₂) of the container (2), wherein the pressing force (PK) can be applied with the aid of a pressure pad (27, 33) placed on the structured packing (25, 26, 32), a liquid distributor (29, 34) placed on the structured packing (25, 26, 32), and/or a weight (64) placed on the structured packing (25, 26, 32).

8. The package assembly according to claim 7, wherein the pressure pad (27, 33) is attached so as to be adjustable on a support device (19, 22) of the container.

9. The package assembly according to claim 8, wherein elongated holes (67) are provided in the pressure pad (27, 33) in which fastening elements (28) for adjusting the pressure pad (27, 33) are accommodated so as to be displaceable.

10. The package assembly according to one of claims 8 - 9, wherein the pressure pad (27, 33) is to be spring pre-loaded to apply the pressing force (PK), with the aid of spring elements (63), in the direction of the structured packing (25, 26, 32).

11. A mass transfer column (1) having a package assembly (65) according to one of claims 5 - 10.

## Revendications

1. Procédé de fabrication d'un système de garnissage (65), comportant les étapes suivantes :
fourniture (S1) d'un récipient (2) ;
fourniture (S2) de paquets de garnissage (42 - 56), chaque paquet de garnissage (42 - 56) comprenant des tôles de garnissage (57 - 62) reliées les unes aux autres ;
installation (S4) des paquets de garnissage (42 - 56) dans le récipient (2) pour former au moins un disque de garnissage (36 - 41) ;
**caractérisé par** :
la fourniture (S3) de tôles de garnissage (57 - 62) supplémentaires ondulées en vrac ;
l'introduction (S5) des tôles de garnissage (57 - 62) supplémentaires entre les paquets de garnissage (42 - 56) de telle manière que l'au moins un disque de garnissage (36 - 41) soit précontraint dans une direction radiale (R) du récipient (2) contre celui-ci, qu'aussi bien les tôles de garnissage (57 - 62) des paquets de garnissage (42 - 56) que les tôles de garnissage (57 - 62) supplémentaires introduites entre les paquets de garnissage (42 - 56) soient disposées exclusivement dans un plan préférentiel (VE) commun ou parallèlement à celui-ci, les paquets de garnissage (42 - 56) étant, pour la fermeture de fentes (72) disposées perpendiculairement au plan préférentiel (VE) et entre les paquets de garnissage (42 - 56), déplacés d'abord les uns vers les autres perpendiculairement au plan préférentiel (VE) puis vers l'extérieur dans la direction radiale (R) jusqu'à ce que les paquets de garnissage (42 - 56) viennent en contact avec le récipient (2), pour former une fente (71), qui est disposée parallèlement au plan préférentiel (VE), et la fente (71), qui est disposée parallèlement au plan préférentiel (VE), étant fermée avec les tôles de garnissage (57 - 62) supplémentaires ondulées en vrac.

2. Procédé selon la revendication 1, dans lequel plusieurs disques de garnissage (36 - 41) sont comprimés par l'application d'une force de compression (PK).

3. Procédé selon la revendication 2 ou 3, dans lequel les tôles de garnissage (57 - 62) supplémentaires sont introduites par paires entre les paquets de garnissage (42 - 56).

4. Procédé selon l'une quelconque des revendications 2 à 3, dans lequel les tôles de garnissage (57 - 62) supplémentaires sont retirées des paquets de garnissage (42 - 56).

5. Système de garnissage (65) pour une colonne d'échange de matière (1), comportant au moins un disque de garnissage structuré (36 - 41) et un récipient (2), dans lequel l'au moins un disque de garnissage structuré (36 - 41) est disposé, l'au moins un disque de garnissage structuré (36 - 41) présentant des paquets de garnissage (42 - 56), chaque paquet de garnissage (42 - 56) comprenant des tôles de garnissage (57 - 62) reliées les unes aux autres, les tôles de garnissage (57 - 62) étant ondulées et présentant des crêtes d'onde (74) et des creux d'onde (75), des tôles de garnissage (57 - 62) adjacentes se touchant sur les crêtes d'onde (74), les paquets de garnissage (42 - 56) étant assemblés les uns aux autres sans fente, **caractérisé en ce que** des tôles de garnissage (57 - 62) supplémentaires ondulées en vrac sont introduites entre les paquets de garnissage (42 - 56) de telle sorte que l'au moins un disque de garnissage (36 - 41) soit précontraint dans une direction radiale (R) du récipient (2) contre celui-ci, et aussi bien les tôles de garnissage (57 - 62) ondulées des paquets de garnissage (42 - 56) que les tôles de garnissage (57 - 62) supplémentaires ondulées en vrac introduites entre les paquets de garnissage (42 - 56) étant disposées exclusivement dans un plan préférentiel (VE) commun ou parallèlement à celui-ci.

6. Système de garnissage selon la revendication 5, dans lequel plusieurs disques de garnissage structurés (36-41) forment un garnissage structuré (25, 26, 32).

7. Système de garnissage selon la revendication 6, dans lequel les disques de garnissage structurés (36 - 41) du garnissage structuré (25, 26, 32) sont soumis à l'action d'une force de compression (PK) dans une direction longitudinale (L₂) du récipient (2), la force de compression (PK) pouvant être appliquée à l'aide d'un dispositif de maintien (27, 33) posé sur le garnissage structuré (25, 26, 32), d'un distributeur de liquide (29, 34) posé sur le garnissage structuré (25, 26, 32) et/ou d'un poids (64) posé sur le garnissage structuré (25, 26, 32).

8. Système de garnissage selon la revendication 7, dans lequel le dispositif de maintien (27, 33) est fixé de manière réglable sur un moyen de support (19, 22) du récipient.

9. Système de garnissage selon la revendication 8, dans lequel des trous oblongs (67) sont prévus sur le dispositif de maintien (27, 33), dans lesquels des éléments de fixation (28) sont reçus de manière déplaçable pour régler le dispositif de maintien (27, 33).

10. Système de garnissage selon l'une quelconque des revendications 8 à 9, dans lequel le dispositif de maintien (27, 33) est sollicité par ressort, à l'aide d'éléments ressorts (63), en direction du garnissage structuré (25, 26, 32) pour appliquer la force de compression (PK).

11. Colonne d'échange de matière (1) comportant un système de garnissage (65) selon l'une quelconque des revendications 5 à 10.
